# EUROPÄISCHE PATENTANMELDUNG

(11) **EP 0 928 961 A2**
(43) Veröffentlichungstag der Anmeldung: **14.07.1999**
(21) Anmeldenummer: 99100114.0
(22) Anmeldetag: 04.01.1999
(51) Int. Cl.: G01M 17/02

(54) **Einrichtung zur Prüfung von Fahrzeugrädern o.dgl., insbesondere zum Betriebsfestigkeitsnachweis an Motorrad-Rädern**

(30) Priorität: 07.01.1998 DE 19800350
(71) Anmelder: FRAUNHOFER-GESELLSCHAFT ZUR FÖRDERUNG DER ANGEWANDTEN FORSCHUNG E.V., 80636 München (DE)
(72) Erfinder: Fischer, Gerhard, Dr.-Ing., 64291 Darmstadt (DE); Grubisic, Vatroslav, Prof. Dr. -Ing., 64354 Reinheim (DE); Klock, Jüurgen, Dipl. -Ing.,, 64853 Otzberg (DE)
(74) Vertreter: Weisert, Annekäte, Dipl.-Ing. Dr.-Ing.

(57) **Zusammenfassung**

Mit der Erfindung wird eine Einrichtung zur Prüfung von Fahrzeugrädern, Radnaben, Radlagern und/oder Radschrauben unter betriebsähnlichen Belastungsbedingungen zur Verfügung gestellt, umfassend eine Halterungseinrichtung zum drehbaren Befestigen eines Fahrzeugrads; eine derart um das Fahrzeugrad herum angeordnete Trommel, daß das Fahrzeugrad über einen darauf befindlichen Reifen in Rolleingriff mit der inneren Umfangsoberfläche der Trommel bringbar ist; eine Vertikal- oder Radialbelastungseinrichtung, die zum Aufbringen einer in der Vertikal- oder Radialrichtung des Fahrzeugrads wirkenden Vertikal- oder Radialkraft auf die Halterungseinrichtung mit letzterer verbunden ist; eine Seiten- oder Axialbelastungseinrichtung zum Aufbringen einer in der Axialrichtung des Fahrzeugrads wirkenden Seiten- oder Axialkraft, wobei die Seiten- oder Axialbelastungseinrichtung zum Aufbringen der Seiten- oder Axialkraft auf die Halterungseinrichtung mit letzterer verbunden ist; wenigstens einen auf der inneren Umfangsoberfläche der Trommel vorgesehenen Anlaufring, der benachbart dem Reifen und der Flanke des Fahrzeugrads angeordnet und auf der dem Reifen zugewandten Seite abgeschrägt ist; und eine Einrichtung zum Drehen der Trommel; wobei die Halterungseinrichtung eine Halterung für wenigstens ein Motorrad-Rad als Fahrzeugrad mit Lagerung des Motorrad-Rads an einer oder beiden Achsenden desselben und einseitiger Befestigung der Halterung an dem übrigen Teil der Halterungseinrichtung umfaßt.

## Beschreibung

Die Erfindung betrifft eine Einrichtung zur Prüfung von Fahrzeugrädern, Reifen, Radnaben, Radlagern und Radschrauben unter betriebsähnlichen Belastungsbedingungen, umfassend
(a) eine Halterungseinrichtung zum drehbaren Befestigen eines Fahrzeugrads und zum Verschwenken desselben in unterschiedliche Sturzwinkel;
(b) eine derart um das Fahrzeugrad herum angeordnete Trommel, daß das Fahrzeugrad über einen darauf befindlichen Reifen in Rolleneingriff mit der inneren Umfangsoberfläche der Trommel bringbar ist;
(c) eine Vertikal- oder Radialbelastungseinrichtung, die zum Aufbringen einer in der Vertikal- oder Radialrichtung des Fahrzeugrads wirkenden Vertikal- oder Radialkraft auf die Halterungseinrichtung mit letzterer verbunden ist;
(d) eine Seiten- oder Axialbelastungseinrichtung zum Aufbringen einer in der Seiten- oder Axialrichtung des Fahrzeugrads wirkenden Seiten- oder Axialkraft, wobei die Seiten- oder Axialbelastungseinrichtung zum Aufbringen der Seiten- oder Axialkraft auf die Halterungseinrichtung mit letzterer verbunden ist;
(e) wenigstens einen auf der inneren Umfangsoberfläche der Trommel angeordneten Ring, der als Anlaufring benachbart dem Reifen und der Flanke des Fahrzeugrads angeordnet und auf der dem Reifen zugewandten Seite abgeschrägt ist; und
(f) eine Einrichtung zum Drehen der Trommel;
(g) wobei die Vertikal- oder Radialbelastungseinrichtung und die Seiten- oder Axialbelastungseinrichtung je für sich gelenkig mit der Halterungseinrichtung verbunden sind.

Die bisherigen Betriebsfestigkeitsuntersuchungsmethoden für Motorrad-Räder sind vor allem folgende:
(1) Rollprüfung unter reiner Vertikalkraft;
(2) Torsionsprüfung bei Einspannung der Felge; und
(3) Fahrversuche mit Motorrädern.

Die Nachteile dieser vorgenannten Prüfmethoden sind, sowohl was deren Durchführung als auch deren Anwendung anbetrifft, insbesondere folgende:
(i) Bei der Rollprüfung unter reiner Vertikalkraft und bei der Torsionsprüfung mit Einspannung der Felge wird keine der tatsächlichen Fahrpraxis entsprechende Verformung erzeugt, so daß diese Prüfmethoden nur partielle Ergebnisse liefern, deren Auswertung für die Praxis kompliziert und problematisch ist.
(ii) Bei den Fahrversuchen mit Motorrädern fehlt eine ausreichende Reproduzierbarkeit der Beanspruchung, so daß die Fahrversuchsergebnisse nur sehr bedingt für die Konstruktion von Motorrädern verwendbar sind, wobei außerdem der Versuchsfahrer, insbesondere bei Extrembelastungen im Fahrversuch, nicht unbeträchtlichen Gefahren ausgesetzt ist.
(iii) Schließlich sind bei Anwendung der vorgenannten Prüfmethoden langwierige, zeit- und kostenaufwendige Prüfungen an den Motorad-Rädern erforderlich, die einerseits zu einer entsprechenden Erhöhung der Kosten der schließlich in den Verkauf gelangenden Motorräder und andererseits zu einer relativ langen Entwicklungszeit für neue Motorrad-Modelle führen.

Aufgabe der Erfindung ist es insbesondere, eine Einrichtung zur Prüfung von Motorrad-Rädern zur Verfügung zu stellen, die eine Prüfung unter betriebsähnlichen Belastungsbedingungen bei Reproduzierbarkeit der Beanspruchung und bei vermindertem Zeit- und Kostenaufwand ermöglicht, so daß die Ergebnisse der mit dieser Einrichtung durchgeführten Prüfungen relativ zuverlässig und unkompliziert auf die Praxis der Motorrad-Fertigung übertragbar sind, ohne daß die Prüfungen verhältnismäßig langwierig sowie zeit- und kostenaufwendig sind.

Diese Aufgabe wird mit einer Einrichtung der eingangs genannten Art, wie sie aus dem europäischen Patent 63 245 und dem US-Patent 4 475 383 der Anmelderin und in einer abgewandelten Form, die von den eingangs genannten Merkmalen (a) bis (g) das letzte Merkmal nicht besitzt, aus der DE 33 41 721 C2 bekannt ist, erfindungsgemäß dadurch gelöst, daß
(1) die Halterungseinrichtung derart verschieblich gelagert ist, daß das Fahrzeugrad zur selbsttätigen Sturzverstellung um den Radaufstandspunkt verschwenkbar ist; und
(2) die Halterungseinrichtung eine Halterung für wenigstens ein Motorrad-Rad als Fahrzeugrad mit einseitiger Befestigung der Halterung an dem übrigen Teil der Halterungseinrichtung umfaßt.

In einer bevorzugten Ausführungsform der erfindungsgemäßen Einrichtung ist die Halterung für das Motorrad-Rad über eine Schwinglagerung an dem übrigen Teil der Halterungseinrichtung, also der Belastungsstruktur, befestigt.

Bevorzugt ist in oder an der Halterung eine Befestigungsvorrichtung für eine Bremse, insbesondere eine Scheibenbremse, für das Motorrad-Rad ausgebildet, so daß über die Bremse, insbesondere die Scheibenbremse, Bremskräfte und Beschleunigungskräfte bei entsprechender Drehrichtung der Trommel gleichzeitig mit den über die Halterungseinrichtung einwirkenden Vertikalkräften und Seitenkräften angewandt werden können, also Kräftekombinationen, wie sie im tatsächlichen Fahrbetrieb eines Motorrads auftreten.

Gegenüber Fahrzeugrädern für Personenkraftwagen und Nutzfahrzeugen ist der Durchmesser der Trommel so gewählt, daß derselbe wesentlich größer als derjenige des Motorrad-Rads ist, vorzugsweise 1,2 bis 2,5 mal so groß wie der Durchmesser des Motorrad-Rads, so daß eine betriebsähnliche Belastung des Motorrad-Rads im Radaufstandspunkt gewährleistet wird.

Von besonderer Wichtigkeit ist die Form des Anlaufrings oder der beiden Anlaufringe, welche erfindungsgemäß bevorzugt so ausgebildet ist, daß sie in besonderer und optimaler Weise den Verhältnissen von Motorrad-Radreifen für möglichst verschleißarme Betriebsfestigkeitsprüfungen angepaßt ist, indem der Anlaufring folgendes aufweist:
(a) eine frühe, relativ steile Anstiegsflanke,
(b) eine demgegenüber flache Mittelflanke,
(c) eine relativ steile Endflanke und
(d) eine Abrundung am inneren Auslauf.

Schließlich ist die Einrichtung nach der Erfindung vorzugsweise so ausgebildet, daß zur Festigkeitsprüfung einer Original-Bremse durch Simulation von Bremskräften mit relativ großem Umschlingungswinkel eine Innentrommel vorgesehen ist.

Die vorstehenden sowie weitere Vorteile und Merkmale der Erfindung seien nachfolgend anhand einer in den Figuren der Zeichnung dargestellten, besonders bevorzugten Ausführungsform der erfindungsgemäßen Einrichtung beschrieben und erläutert; es zeigen:
- Fig. 1: eine, teilweise im Schnitt dargestellte, schematische Aufrißansicht einer bevorzugten Ausführungsform der Einrichtung nach der Erfindung;
- Fig. 2: eine, teilweise im Schnitt dargestellte Seitenaufrißansicht des für die Anbringung eines Motorrad-Rads besonders wichtigen Teils der Ausführungsform der Fig. 1 der Einrichtung nach der Erfindung;
- Fig. 2A: eine Darstellung des Abrollens des Motorrad-Rads auf der Innenfläche der Trommel in einer zur Zeichnungsebene der Figur 1 senkrechten Ebene, wobei die in dieser Ebene wirkenden Kräfte durch Pfeile angegeben sind; und
- Fig. 3: einen Querschnitt durch den in Fig. 2 oberen Teil des dortigen linken Anlaufrings zur Veranschaulichung der in der Erfindung bevorzugt vorgesehenen besonderen Form eines solchen Anlaufrings.

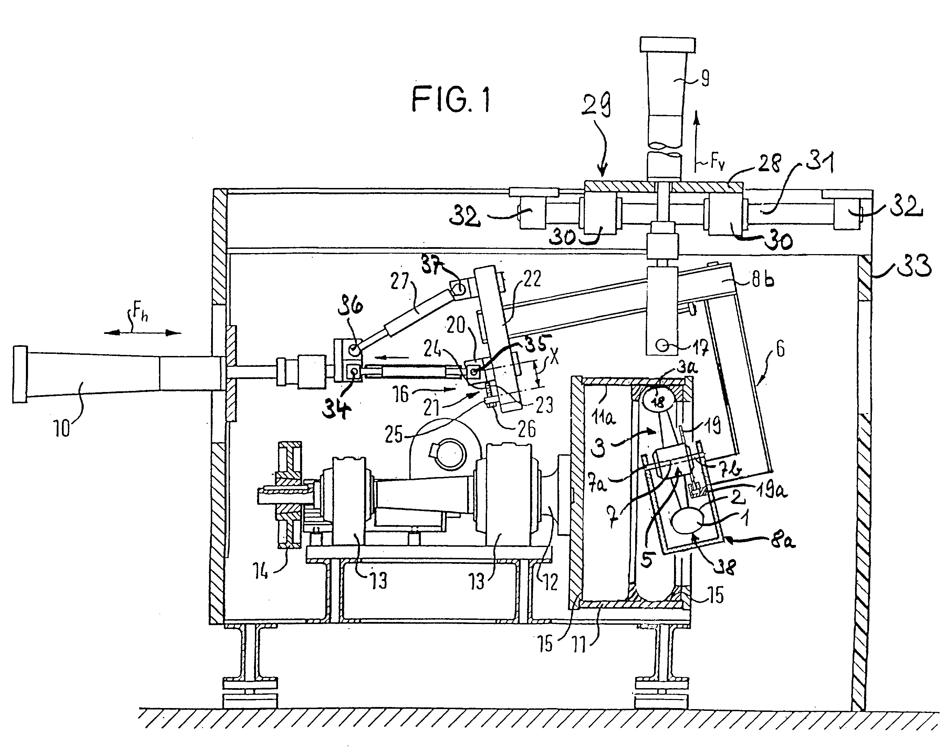

Es sei zunächst auf die Fig. 1 Bezug genommen, die eine Ausführungsform einer Einrichtung zur Prüfung von Fahrzeugrädern, insbesondere Motorrad-Rädern, Radnaben, Radlager und/oder Radschrauben unter betriebsähnlichen Belastungsbedingungen zeigt, welche einschließlich zu prüfender Objekte folgendes aufweist:

Einen Reifen 1, der auf der Felge 2 eines Motorrad-Rades 3 montiert und mit Nennluftdruck oder erhöhtem Luftdruck aufgepumpt ist. Zur Befestigung des Motorrad-Rads 3 und zur Aufnahme der Radkräfte ist eine Radnabe 4 mit Radlager 5 vorgesehen. Bei der Radnabe 4 kann es sich um eine überdimensionierte Versuchsnabe handeln, wenn zum Beispiel das Motorrad-Rad 3 bzw. der Reifen 1 geprüft werden soll oder es kann sich hierbei um eine Originalnabe mit der zugehörigen Original-Motorradlagerung handeln, wenn die Radnabe und/oder die Motorradlagerung geprüft werden soll. Die Übertragung der eingeleiteten quasistatischen Kräfte in das sich drehende Motorrad-Rad 3 erfolgt mittels des Radlagers 5 und des oder der Achse 7 und Achsenden 7a, 7b, durch welche die Enden der Achse 7 des Motorrad-Rads 3 an der Halterung 8a befestigt sind.

Weiterhin weist die Einrichtung gemäß der Figur 1 eine Belastungsübertragungsstruktur 8b, insbesondere in der Form eines Belastungsbügels 8b auf, die bzw. der zusammen mit der Halterung 8a eine Halterungseinrichtung 6 zum Verschwenken des drehbar gelagerten Motorrad-Rads 3 um dessen Radaufstandspunkt 3a bildet. Über diesen Belastungsbügel 8b, die Halterung 8a, die Radachse 7 und das Radlager 5, die Radnabe 4 etc. werden eine Vertikal- oder Radialkraft und eine Seiten- oder Axialkraft in das Motorrad-Rad 3 eingeleitet, und zwar so, daß die am Reifen 1 entstehenden Reaktionskräfte in einem definierten Radaufstandspunkt 3a abgenommen werden. Zum Anwenden einer in der Radialrichtung des Motorrad-Rads 3 wirkenden konstanten oder unterschiedlich hohen Vertikal- oder Radialkraft Fᵥ ist eine Vertikal- oder Radialbelastungseinrichtung 9, die vorliegend als servohydraulischer Zylinder ausgebildet ist, vorgesehen. Weiter ist zum Anwenden einer in der Axialrichtung des Motorrad-Rads 3 wirkenden konstanten oder unterschiedlich hohen Seiten- oder Axialkraft Fₕ eine Seiten- oder Axialbelastungseinrichtung 10 vorhanden, die vorliegend ebenfalls als servohydraulischer Zylinder ausgebildet ist.

Da die Bezeichnungen "Vertikalkraft" Fᵥ und "Radialkraft" ebenso wie die Bezeichnungen "Seitenkraft" Fₕ und "Axialkraft" Synonyme sind, wird nachstehend nur jeweils die eine oder andere der beiden Bezeichnungen verwendet.

Schließlich ist eine um das Motorrad-Rad 3 herum angeordnete Trommel 11 so vorgesehen, daß das Motorrad-Rad 3 über den darauf befindlichen Reifen 1 in Rolleingriff mit der inneren Umfangsoberfläche 11a der Trommel 11 bringbar ist. Die Trommel 11 besteht beispielsweise aus einer Grundplatte, einem Trommelkörper und einem Deckel und weist zwei Anlaufringe 15 auf. In dieser Trommel 11, in der das Motorrad-Rad 3 abrollt, werden die Axialreaktionskraft und die Radialreaktionskraft im Radaufstandspunkt 3a bzw. in der Radaufstandsfläche im Reifen 1 abgenommen. Der Innendurchmesser des Trommelkörpers ist signifikant größer als der Reifendurchmesser.

Außerdem ist eine Einrichtung zum Drehen der Trommel 11 vorgesehen, welche eine Antriebswelle 12 zur Befestigung der Trommel 11, Lager 13 zur Lagerung der Antriebswelle 12 und zur Aufnahme der Radial- und Axialreaktionskräfte, einen nicht gezeigten Antriebsmotor zum Antrieb der Antriebswelle 12 über einen Keilriemenantrieb 14 und damit zum Antrieb der Trommel 11 und des Fahrzeugrads 3 sowie zum Abbremsen der Antriebswelle 12, der Trommel 11 und des Fahrzeugrads 3 umfaßt.

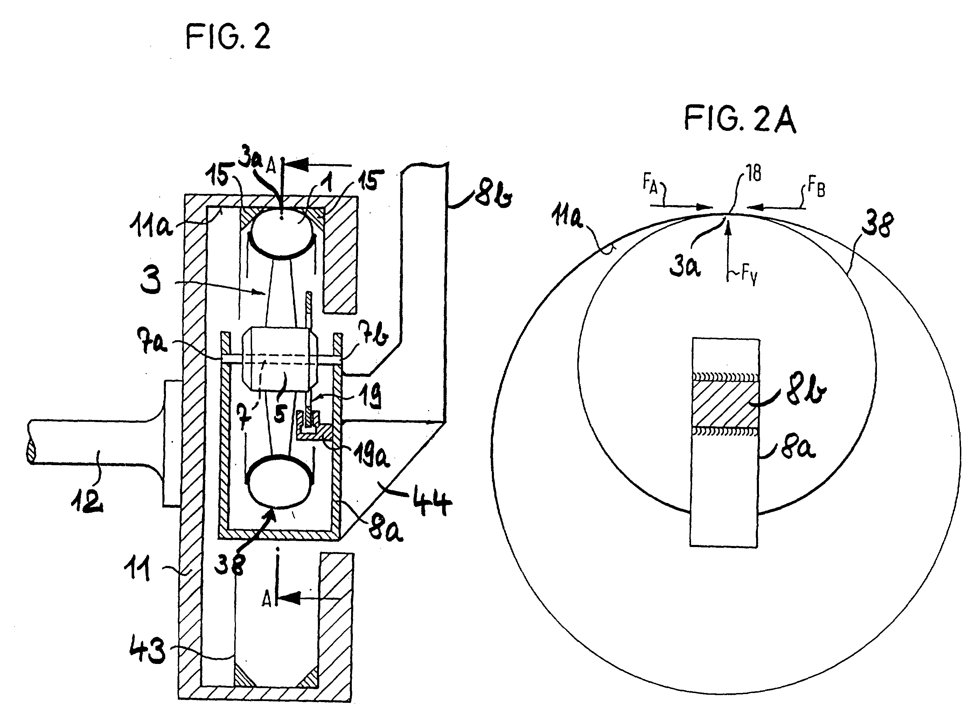

Es sei nun die Ankopplung der Vertikal- oder Radialbelastungseinrichtung 9 und der Seiten- oder Axialbelastungseinrichtung 10 an die Halterungseinrichtung 6 und in Verbindung damit die Funktionsweise der vorstehend beschriebenen Einrichtung zur Prüfung von Fahrzeugrädern, insbesondere Motorrad-Rädern, Radnaben, Radlagern und Radschrauben unter betriebsähnlichen Belastungsbedingungen näher erläutert (siehe Figur 1 und teilweise auch Figur 2):

Die betriebsähnliche Prüfung von Fahrzeugrädern bzw. Motorrad-Rädern 3, Radnaben 4, Radschrauben und/oder Radlagern 5 erfolgt unter Einleitung der im Betrieb auftretenden Radkräfte über den Reifen 1 in das sich drehende Motorrad-Rad 3. Bei den am Reifen 1 angreifenden Radkräften kann es sich um Radialkräfte Fᵥ, positive Axialkräfte +Fₕ, negative Axialkräfte -Fₕ sowie Tangentialkräfte F_{A}, F_{B}, d.h. Antriebskräfte F_{A} und Bremskräfte F_{B} sowie Kombinationen hiervon handeln.

Zunächst sei die Erzeugung von in der Radialrichtung des Motorrad-Rads 3 wirkenden Radialkräften beschrieben:

Auf das Motorrad-Rad 3 wirkende Radialkräfte entstehen im Betrieb bei Geradeausfahrt, wobei diese Radialkräfte in unterschiedlicher Höhe je nach den Fahrbedingungen auftreten können, bei denen es sich beispielsweise um eine (im Prüfbetrieb simulierte) Fahrt auf Straßen unterschiedlicher Unebenheit, über Schlaglöcher, Frostaufbrüche, Bahnübergänge usw. handeln kann, sowie bei Kurvenfahrt infolge der Gewichtsverlagerung. Die am Motorrad-Rad 3 wirkenden Radialreaktionskräfte werden erzeugt, wenn an der Radialbelastungseinrichtung 9 eine Zugkraft als Radialkraft Fᵥ in den Belastungsbügel 8b eingeleitet wird und sich das Motorrad-Rad 3 gegenüber dem Reifen 1 an der sich drehenden Trommel 11 abstützt. Durch die Verformung, nämlich die Eindrückung, des Reifens 1 unter der Radialreaktionskraft entsteht ein Radaufstandspunkt 3a oder eine Radaufstandslinie oder -fläche, die hier mit dem Begriff "Radaufstandspunkt" mit erfaßt sein sollen, d.h. die Reaktionskraft wird über einen definierten Bereich über den Reifenumfang und die Reifenbreite eingeleitet. Voraussetzung zur Erzeugung von rein radialen Reaktionskräften im Motorrad-Rad 3 ist die Einleitung der erwähnten Zugkraft mit Hilfe der Radialbelastungseinrichtung 9 in der Radmitte.

Hierzu ist die Vertikal- oder Radialbelastungseinrichtung 9 auf einer Basis 28, zum Beispiel einer Platte, montiert; und diese Basis 28 ist über eine Verschiebeführung 29 horizontal, d.h. parallel zur Innenlauffläche 11a der Trommel 11 frei verschiebbar bzw. frei gleitend verschiebbar, so daß die Vertikal- oder Radialbelastungseinrichtung 9 dem Motorrad-Rad 3 bei seitlichen Verschiebungen in der Trommel 11 von selbst folgt und die Vertikal- oder Radialkraft Fᵥ stets im Radaufstandspunkt 3a eingeleitet bzw. abgenommen wird. Durch die verschiebbar vorgesehene Einleitung der Vertikal- oder Radialkraft in den Belastungsbügel 8b bzw. die Halterungseinrichtung 6 ist außerdem eine Anpassung für jede Reifenbreite möglich.

Vorliegend umfaßt die Verschiebeführung 29 an der Basis 28 befestigte Führungshülsen bzw. -gleitlager 30, die auf einer Führungsstange 31 oder mehreren parallelen Führungsstangen gleitend verschiebbar sind, welche ihrerseits über Halterungen 32 ortsfest, z.B. am Rahmen 33 der Prüfeinrichtung, angebracht ist bzw. sind. Das ist jedoch nur ein Ausführungsbeispiel, denn die Verschiebeführung 29 kann in der verschiedensten Art ausgeführt sein, um die obige Funktionsweise sicherzustellen.

Als nächstes sei die Erzeugung von in der Axialrichtung des Motorrad-Rads 3 wirkenden Axialkräften Fₕ erläutert:

Axialkräfte Fₕ entstehen im Betrieb eines Fahrzeugs bei Kurvenfahrt mit zur Fahrzeugmitte gerichteter Kraftkomponente, also positiver Axialkraft +Fₕ am kurvenäußeren Rand und bei Geradeausfahrt über Fahrbahnunebenheiten, zum Beispiel Schlaglöcher, wodurch die Kraftrichtung sowohl zur Fahrzeugmitte, was einer positiven Axialkraft +Fₕ entspricht, als auch zur Fahrzeugaußenseite, was einer negativen Axialkraft -Fₕ entspricht, gerichtet sein kann. Im Fahrbetrieb können Axialkräfte nur in Verbindung mit Radialkräften als Lastkombinationen auftreten. In der vorliegenden Einrichtung werden die auf das Motorrad-Rad 3 einwirkenden Axialkräfte Fₕ als Reaktionskräfte mit Hilfe der Axialbelastungseinrichtung 10, die als servohydraulischer Zylinder ausgebildet ist, erzeugt.

Eine positive Axialreaktionskraft wird bei gegebener Radialreaktionskraft durch eine Zugkraft an der Axialbelastungseinrichtung als Reaktionskraft durch die Abstützung des Reifens 1 an der schrägen Fläche des Anlaufringes 15 hervorgerufen. Die Zugkraft an der Axialbelastungseinrichtung 10 wird in der Höhe der Innenlauffläche 11a des Trommelkörpers 11 im Radaufstandspunkt 3a eingeleitet, wobei die Axialreaktionskraft am Reifen 1 im Bereich der Radaufstandsfläche über einen begrenzten Bereich des Reifenumfangs des Reifens resultiert. Durch die Einleitung der Axialkraft in Höhe der Radaufstandspunkte 3a sind betriebsgleiche Hebelarmverhältnisse gewährleistet. Eine negative Axialreaktionskraft wird bei gegebener Radialreaktionskraft durch eine Druckkraft an der Axialbelastungseinrichtung 10 erzeugt, wodurch die Axialreaktionskraft am Motorrad-Rad 3 durch Ablauf des Reifens 1 am äußeren Anlaufring 15 entsteht.

Die Anlaufringe 15 sind im Trommelkörper 11 verschiebbar angeordnet, so daß eine Anpassung an beliebige Reifenbreiten bzw. Fahrzeugradgrößen möglich ist, was aufgrund eines begrenzten Zylinderwegs des die Axialbelastungseinrichtung 10 bildenden servohydraulischen Zylinders zu bevorzugen ist.

Durch die Einleitung der Axialreaktionskräfte über die Anlaufringe 15 kann mit der vorliegenden Einrichtung mittels des hierdurch bedingten Formschlusses ein prinzipiell beliebiges Verhältnis zwischen Axial- und Radialreaktionskraft erreicht werden.

Die Steuerung der Radialbelastungseinrichtung 9 und der Axialbelastungseinrichtung 10 erfolgt unabhängig voneinander, so daß jede gewünschte Lastkombination, bestehend aus Radialkräften Fᵥ und positiven Axialkräften +Fₕ sowie negativen Axialkräften -Fₕ eingestellt werden kann. Dadurch ist eine betriebsähnliche, regellose bzw. statistische Simulation aller im Betrieb auftretenden Belastungsfälle möglich.

Wesentlich für das in der erfindungsgemäßen Einrichtung erfolgende Verschwenken des Motorrad-Rads 3 um den Radaufstandspunkt 3a ist in Verbindung mit der erfindungsgemäß vorgesehenen freien oder selbsttätigen Verschiebbarkeit der Vertikal- oder Radialbelastungseinrichtung 9 und der Halterungseinrichtung 6 mit letzterer, wie oben beschrieben, die Verschwenkbarkeit der Halterungseinrichtung 6 bzw. des Belastungsbügels 8b um die Verschwenkachse 17, welche parallel zur Radaufstandsfläche bzw. zur Innenlauffläche 11a und senkrecht zur Radachse 7 ist und über welche die Halterungseinrichtung 6 bzw. der Belastungsbügel 8b gelenkig mit der Vertikal- oder Radialbelastungseinrichtung 9 verbunden ist.

Denn die Verschwenkbarkeit des Fahrzeugrades 3 um den Radaufstandspunkt 3a bzw. die Radaufstandsfläche, d.h. um eine virtuelle Achse, die parallel zur Verschwenkachse 17 und senkrecht zu der durch die Verschiebevorrichtung 29 gegebenen Verschiebungsrichtung ist, wird ermöglicht durch die freie Verschiebbarkeit der Halterungseinrichtung 6 bzw. des Belastungsbügels 8b längs der Verschiebeführung 29 und die gleichzeitige Verschwenkbarkeit der Halterungseinrichtung 6 bzw. des Belastungsbügels 8b um die Verschwenkachse 17. Denn wenn sich das Motorrad-Rad 3 um den Radaufstandspunkt 3a im Sinne einer Sturzwinkeländerung verschwenkt, erfolgt gleichzeitig
(a) ein Verschieben der Halterungseinrichtung 6 zusammen mit der Vertikal- oder Radialbelastungseinrichtung 9 längs der Verschiebeführung 29, und
(b) ein Verschwenken der Halterungseinrichtung 6 um die Verschwenkachse 17.

Dadurch, daß die Vertikal- oder Radialbelastungseinrichtung 9 zusammen mit der Halterungseinrichtung 6 frei verschiebbar ist, wird gewährleistet, daß die Vertikal- oder Radialkraft Fᵥ auch bei seitlicher Verschiebung bzw. Auswanderung des Motorrad-Rads 3 nach dem einen oder anderen der beiden Anlauf-ringe 15 zu immer im Radaufstandspunkt 3a angreift bzw. abgenommen wird.

Eine demgegenüber "verschlechterte" Ausführungsform der Erfindung, die zufriedenstellend arbeitet, wenn die Position des Radaufstandspunkts 3a in Axialrichtung der Trommel 11 festgehalten würde, besteht darin, daß die Halterungseinrichtung 6 längs einer - nicht dargestellten - linearen Verschiebeführung, die um die Verschwenkachse 17 verdrehbar ist, frei verschieblich ist. Auf diese Weise könnte sich das Motorrad-Rad 3 ebenfalls um den Radaufstandspunkt 3a im Sinne einer Sturzverstellung verschwenken, während die Vertikal- oder Radialbelastungseinrichtung 9 ortsfest bleibt. Um dann den Radaufstandspunkt 3a parallel zur Achse der Trommel 11 verstellen zu können, müßte die Vertikal- oder Radialbelastungseinrichtung 9 im Sinne der Verschiebelagerung 29 verstellbar sein.

Es sei nun der Aufbau der weiterhin vorgesehenen Stellvorrichtung 16 zur Voreinstellung des Sturzwinkels des Motorrad-Rads 3 derart, daß der Sturz auf einen vorbestimmten maximalen Sturzwinkel begrenzt ist, sich jedoch kleinere Sturzwinkel (Zwischengröße) entsprechend dem Verhältnis der angewandten Axial- und Radialkraft von selbst einstellen, beschrieben:

Generell ist vorliegend die Stellvorrichtung 16 eine Begrenzungseinrichtung zur Beschränkung des maximalen Sturzwinkels und damit des Verschwenkwinkels der Halterungseinrichtung 6 um die zur Radachse 7 senkrechte und zur Radaufstandsfläche 18 bzw. Innenlauffläche 11a der Trommel 11 parallele Verschwenkachse 17. Die Stellvorrichtung 16 umfaßt eine Positionierungs- oder Arretierungsvorrichtung 21 für ein Angriffselement 20 der Seiten- oder Axialbelastungseinrichtung 10, über welches letztere an der Halterungseinrichtung 6 zum Erzeugen eines Moments um die Verschwenkachse 17 derselben angreift.

Vorliegend ist das Angriffselement 20 ein Verschiebeelement, das auf einem Arm 22 an der um die Verschwenkachse 17 verdrehbaren Halterungseinrichtung 6 verschiebbar ist, und die Positionierungs- oder Arretierungsvorrichtung 21 ist ein die maximale wirksame Länge des Arms 22 begrenzender verstellbarer Anschlag 23 für das Verschiebeelement 20, wobei der Anschlag 23 die Form eines Gewindebolzens 24 hat, der in einer am Arm 22 fest angebrachten Mutter 25 parallel zum Arm 22 verstellbar ist und durch eine Kontermutter 26 feststellbar ist.

Die Stellvorrichtung 16 kann aber auch als zum Beispiel hydraulisch oder elektrisch verstellbare Positionierungs- und Arretierungsvorrichtung, also als fernverstellbare Stellvorrichtung ausgebildet sein.

Vorliegend ist die Stellvorrichtung 16 eine Einrichtung zum Verstellen des Moments, welches durch die Seiten- oder Axialbelastungseinrichtung 10 bei deren unveränderter Krafteinstellung auf die verschwenkbar gelagerte Halterungseinrichtung 6 ausgeübt wird, denn die Begrenzung des maximalen Sturzwinkels erfolgt durch eine Voreinstellung der Seitenkrafteinleitung zum Beispiel mechanisch, elektrisch oder hydraulisch. Durch Erhöhung des Abstandes X wird ein geringeres Moment durch Fₕ erzeugt und der Sturzwinkel reduziert. Bei allen Zwischengrößen von Fₕ bzw. Fᵥ folgt analog ein reduzierter Sturzwinkel.

Nach erfolgter Voreinstellung stellen sich alle Zwischengrößen des Sturzwinkels entsprechend der Höhe der Kraft Fᵥ, Fₕ und der Kinematik automatisch ein. Dabei kann infolgedessen auf einen hydraulischen Zylinder zur Sturzeinstellung und die zugehörige komplizierte Steuerung desselben verzichtet werden.

Dies stellt eine wesentliche Verbesserung auch gegenüber Vorrichtungen mit der Erzeugung von zusätzlichen Steuergrößen des Sturzwinkels über hydraulische Zylinder dar. Diese müssen ständig in jeder Laststufe programmiert werden und folgen nicht der einfachen Kennlinie. Dabei sind aufwendige Fahrbetriebsmessungen im voraus erforderlich, um die zutreffenden Sturzsteuersignale ableiten zu können. Zudem verteuert ein hydraulischer Sturzeinstellzylinder die Versuchseinrichtung und die Versuchskosten erheblich.

Weiterhin ist zum Dämpfen der Bewegung der Halterungseinrichtung 6 eine Dämpfungseinrichtung 27 zwischen dem Arm 22 der Halterungseinrichtung 6 und der Seiten- oder Axialbelastungseinrichtung 10 angeordnet.

Die Seiten- oder Axialbelastungseinrichtung 10 und die Dämpfungseinrichtung 27 sind über Gelenke 34, 35, 36 und 37 mit dem Arm 22 verbunden.

Zur Ansteuerung des vorliegenden Radversuchsstandes unter Einbeziehung von Brems- und Antriebskräften kann z.B. ein 4-kanaliges Steuerprogramm dienen, das maßgebende Last fälle einschließlich Kurven- und Geradeausfahrt simuliert.

In Fig. 2 ist in einer vergrößerten Teilansicht der Fig. 1 die Halterung 8a mit ihrer Verbindung zur Belastungsübertragungsstruktur 8b gezeigt, die in der vorliegenden bevorzugten Ausführungsform als Belastungsbügel ausgebildet ist. Bevorzugt ist am Motorrad-Rad 3 eine Scheibenbremse 19 vorgesehen, die vorzugsweise eine Original-Scheibenbremse eines Motorrads ist, welche über eine Befestigungsvorrichtung 19a an der Halterung 8a angebracht ist.

Zwischen dem Belastungsbügel 8b und der Halterung 8a kann eine (nicht gezeigte) aktiv oder passiv schwingungsfähige Struktur angebracht sein, durch welche das Motorrad-Rad 3 in Schwingungszustände versetzt werden kann, mit denen im praktischen Fahrbetrieb auftretende Schwingungen simuliert werden. Mit 44 ist eine Versteifung bezeichnet, die in Fig. 1 weggelassen ist.

In Fig. 2A sind in einem schematischen Schnitt durch die Einrichtung der Fig. 2 längs der Linie A-A die innere Umfangsoberfläche 11a der Trommel 11 und die äußere Abrollfläche 38 des Reifens 1 sowie die im Radaufstandspunkt 3a in der Zeichnungsebene der Fig. 2 erzeugbaren Kräfte schematisch angedeutet, nämlich die Antriebskraft F_{A}, die Bremskraft F_{B}, die durch Drehrichtungsumkehr der Trommel 11 auch als Beschleunigungskraft angewandt werden kann, und die Vertikalkraft Fᵥ.

Außerdem wirken auf den Reifen 1 die oben erwähnten Seitenkräfte Fₕ senkrecht zur Zeichnungsebene der Fig. 2.

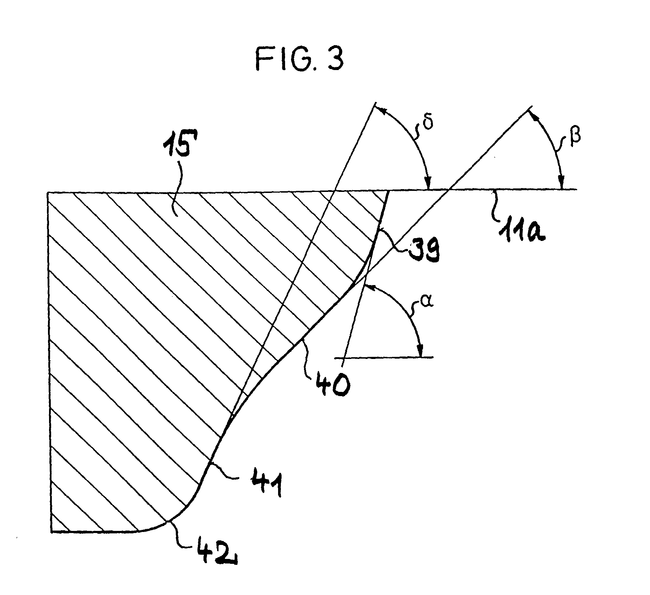

Die Fig. 3 zeigt eine Querschnittsform einer bevorzugten Ausführungsform eines Anlaufrings 15, und zwar vorliegend des in den Fig. 1 und 2 linken, oberen Querschnitts, die natürlich entsprechend auch für den rechten, oberen und den linken und rechten, unteren Querschnitt in Fig. 1 gilt. Dieser Querschnitt hat eine derartige erfindungsgemäße Form, daß er den Verhältnissen von Motorrad-Radreifen für möglichst verschleißarme Betriebsfestigkeitsuntersuchungen optimal angepaßt ist, indem der Querschnitt dieses Anlaufrings 15 folgendes aufweist:
(a) eine frühe Anstiegsflanke 39 mit einem relativ steilen Anstiegswinkel α,
(b) eine Mittelflanke 40 mit einem relativ flachen Anstiegswinkel β,
(c) eine Endflanke 41 mit einem relativ steilen Anstiegswinkel δ und
(d) eine Abrundung am inneren Auslauf 42.

Die Größe der Winkel α, β und δ hängt insbesondere von der Reifenhöhe und -form sowie -breite und dem Reifendurchmesser und -profil sowie der radialen und axialen Steifigkeit des Reifens ab.

Zur Festigkeitsprüfung einer Original-Bremse durch Simulation von Bremskräften F_{B} mit relativ großem Umschlingungswinkel ist in Fig. 2 eine Innentrommel 43 vorgesehen.

In der nachfolgenden Tabelle "Belastungsprogramme" sind mit der erfindungsgemäßen Einrichtung ausführbare beispielhafte Belastungsprogramme angegeben, mit denen die unterschiedlichsten Belastungsabschnitte in unterschiedlichen Aufeinanderfolgen und Längen von verschiedensten Motorrad-Rädern ausführbar sind. In dieser Tabelle ist die Vertikal- oder Radialkraft Fᵥ als "senkrechte Kraft F_{z,i}" bezeichnet, während die Seiten- oder Axialkraft Fₕ mit "Seitenkraft F_{y,i}" und die Brems- oder Beschleunigungskraft F_{B} mit "Längskraft F_{x,i}" bezeichnet ist, in welchen Bezeichnungen x, y und z die Koordinatenrichtung dieser Kräfte in einem entsprechenden kartesischen Koordinatensystem sind und i die Wirkung dieser Kraft, nämlich statisch oder dynamisch, bezeichnet.

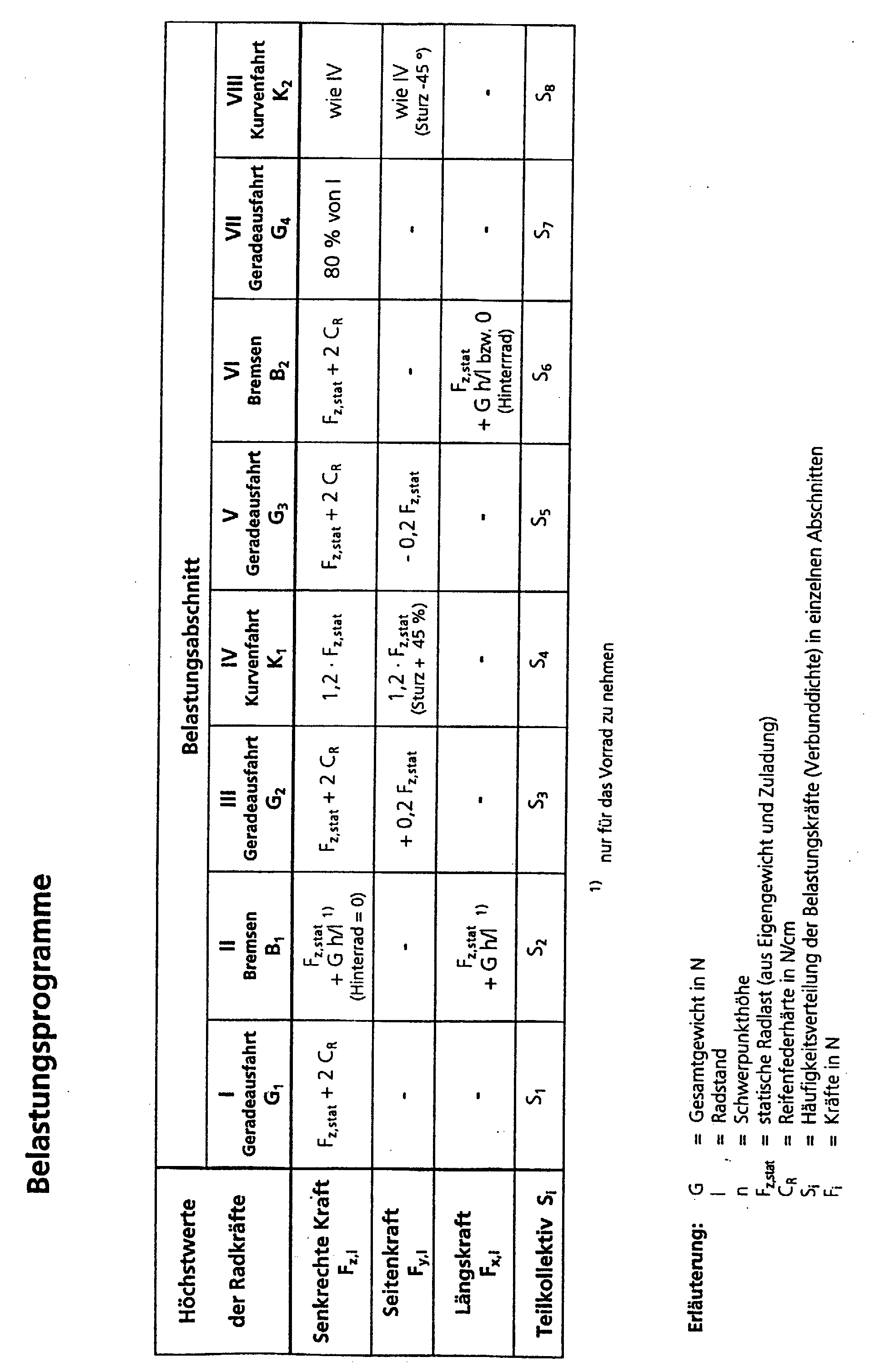

Die Einrichtung nach der Erfindung zur Überprüfung von Motorrad-Rädern unter betriebsähnlichen Belastungsbedingungen, hat kurz zusammengefaßt in einer besonders bevorzugten Ausführungsform insbesondere folgende Merkmale und Anwendungsmöglichkeiten:
(1) die Einrichtung besitzt eine Halterungseinrichtung für Motorrad-Räder mit umfassender Befestigung an beiden Achsenden, insbesondere für Standard-Räder, und einseitiger Anbindung für entsprechende Schwingungslagerung.
(2) Die Einrichtung besitzt eine Befestigungsvorrichtung für eine Scheibenbremse.
(3) Gegenüber einer entsprechenden Einrichtung für die Prüfung von Kraftfahrzeugrädern besitzt die Einrichtung einen vergrößerten Trommeldurchmesser zur Gewährleistung einer betriebsähnlichen Belastung im Radaufstandspunkt.
(4) Die Anlaufringform ist den Verhältnissen von Motorrad-Reifen derart angepaßt, daß möglichst verschleißarme Betriebsfestigkeitsversuche ausführbar sind, und zwar weist die Anlaufringform eine frühe, steile Anstiegsflanke, eine flachere Mittelflanke und eine steile Endflanke sowie eine Abrundung am inneren Auslauf auf.
(5) Die Einrichtung ermöglicht eine Simulation von Bremskräften F_{B} und Beschleunigungskräften (Antrieb) F_{A} über die gleiche Scheibenbremse, jedoch mit Drehrichtungsumkehr der Trommel. Diese Bremskräfte und/oder Beschleunigungskräfte werden den Vertikalkräften Fᵥ und den Seitenkräften Fₛ überlagert, die in bekannten, vereinfachten Einrichtungen nach dem Stande der Technik nicht simulierbar sind.
(6) Die Belastungsdaten für die Einrichtung sind unter Einbeziehung von spezifischen Einsatzbedingungen der Motorrad-Räder einstellbar.
(7) Die Einrichtung ermöglicht einen Festigkeitsnachweis bzw. eine Festigkeitsprüfung von Original-Bremsen durch Simulation der Bremskräfte mit größerem Umschlingungswinkel in einer Innentrommel.

Besonders wichtige Unterschiede der erfindungsgemäßen Einrichtung für die Prüfung von Motorrad-Rädern gegenüber der Einrichtung, wie sie in der europäischen Patentschrift 63 245 und der US-Patentschrift 4 475 383 sowie der deutschen Patentschrift 3 341 721 beschrieben ist, sind bei besonders bevorzugten Ausführungsformen der Erfindung, insbesondere folgende:
(a) Die erfindungsgemäße Einrichtung hat einen größeren Durchmesser und eine schmalere Bauausführung gegenüber der Einrichtung für Kraftfahrzeugräder.
(b) Die Halterung greift in der erfindungsgemäßen Einrichtung in den meisten Fällen, d.h. mit Ausnahme von Motorrad-Rädern, die im Original-Motorrad eine einseitige Achslagerung haben und natürlich auch so geprüft werden, beidseitig an der Achse an, und im Gegensatz hierzu greift die obige Einrichtung bei Rädern von Personenkraftwagen und Nutzfahrzeugen einseitig an der Radachse an.
(c) In der erfindungsgemäßen Einrichtung ist eine zusätzliche Belastung durch Bremsen und Beschleunigen möglich, welche Vorgänge in der Praxis auf den wesentlichen Anteil der Spannungen an den hierfür kritischen Speichen bewirken, wobei die Simulation dieser Belastungen mit einer Bremse bei wahlweiser Drehrichtungumkehr der Trommel durchführbar ist.
(d) Mit der Einrichtung nach der Erfindung können unterschiedliche Reifenformen geprüft werden, die eine jeweils andere Trommel- und Anlaufringform erfordern.
(e) Mit der Einrichtung nach der Erfindung sind neuartige Belastungsprogramme ausführbar, wie die obige Tabelle zeigt.

## Patentansprüche

1. Einrichtung zur Prüfung von Fahrzeugrädern (3), Reifen (1), Radnaben (4), Radlagern (5) und/oder Radschrauben unter betriebsähnlichen Belastungsbedingungen, umfassend
(a) eine Halterungseinrichtung (6) zum drehbaren Befestigen eines Fahrzeugrads (3) und zum Verschwenken desselben in unterschiedliche Sturzwinkel;
(b) eine derart um das Fahrzeugrad (3) herum angeordnete Trommel (11), daß das Fahrzeugrad (3) über einen darauf befindlichen Reifen (1) in Rolleneingriff mit der inneren Umfangsoberfläche (11a) der Trommel (11) bringbar ist;
(c) eine Vertikal- oder Radialbelastungseinrichtung (9), die zum Aufbringen einer in der Vertikal- oder Radialrichtung des Fahrzeugrads (3) wirkenden Vertikal- oder Radialkraft auf die Halterungseinrichtung (6) mit letzterer verbunden ist;
(d) eine Seiten- oder Axialbelastungseinrichtung (10) zum Aufbringen einer in der Seiten- oder Axialrichtung des Fahrzeugrads (3) wirkenden Seiten- oder Axialkraft, wobei die Seiten- oder Axialbelastungseinrichtung (10) zum Aufbringen der Seiten- oder Axialkraft auf die Halterungseinrichtung (6) mit letzterer verbunden ist;
(e) wenigstens einen auf der inneren Umfangsoberfläche (11a) der Trommel (11) angeordneten Ring, der als Anlaufring (15) benachbart dem Reifen (1) und der Flanke des Fahrzeugrads (3) angeordnet und auf der dem Reifen (1) zugewandten Seite abgeschrägt ist; und
(f) eine Einrichtung (12 bis 14) zum Drehen der Trommel (11); (g) wobei die Vertikal- oder Radialbelastungseinrichtung (9) und die Seiten- oder Axialbelastungseinrichtung (10) je für sich gelenkig mit der Halterungseinrichtung (6) verbunden sind;
dadurch **gekennzeichnet**, daß
(1) die Halterungseinrichtung (6) derart verschieblich gelagert ist, daß das Fahrzeugrad (3) zur selbsttätigen Sturzverstellung um den Radaufstandspunkt verschwenkbar ist; und
(2) die Halterungseinrichtung (6) eine Halterung (8a) für wenigstens ein Motorrad-Rad (3) als Fahrzeugrad mit einseitiger Befestigung der Halterung (8a) an dem übrigen Teil (8b) der Halterungseinrichtung (6) umfaßt.

2. Einrichtung nach Anspruch 1, dadurch **gekennzeichnet**, daß die Halterung (8a) über eine Schwinglagerung an dem übrigen Teil (8b) der Halterungseinrichtung (6) befestigt ist.

3. Einrichtung nach Anspruch 1 oder 2, dadurch **gekennzeichnet**, daß in oder an der Halterung (8a) eine Befestigungsvorrichtung (19a) für eine Bremse (19), insbesondere eine Scheibenbremse, für das Motorrad-Rad (3) vorgesehen ist.

4. Einrichtung nach Anspruch 1, 2 oder 3, dadurch **gekennzeichnet**, daß der Durchmesser der Trommel (11) derart ist, daß eine betriebsähnliche Belastung des Motorrad-Rads (3) im Radaufstandspunkt (3a) gewährleistet ist.

5. Einrichtung nach einem der Ansprüche 1 bis 4, **gekennzeichnet** durch eine derartige Form des Anlaufrings (15), welche den Verhältnissen von Motorrad-Radreifen (1) für möglichst verschleißarme Betriebsfestigkeitsprüfungen angepaßt ist, indem der Anlaufring (15) folgendes aufweist:
(a) eine frühe, relativ steile Anstiegsflanke (39),
(b) eine demgegenüber flache Mittelflanke (40),
(c) eine relativ steile Endflanke (41) und
(d) eine Abrundung am inneren Auslauf (42).

6. Einrichtung nach einem der Ansprüche 1 bis 5, dadurch **gekennzeichnet**, daß zur Festigkeitsprüfung einer Original-Bremse (19) durch Simulation von Bremskräften (F_{B}) mit relativ großem Umschlingungswinkel eine Innentrommel (43) vorgesehen ist.

7. Einrichtung nach einem der Ansprüche 1 bis 6, dadurch **gekennzeichnet**, daß das Motorrad-Rad (3) an beiden Achsenden (7a, 7b) desselben in der Halterung (8a) gelagert ist.
